# EUROPÄISCHE PATENTANMELDUNG

(11) **EP 1 072 467 A2**
(43) Veröffentlichungstag der Anmeldung: **31.01.2001**
(21) Anmeldenummer: 00870168.2
(22) Anmeldetag: 24.07.2000
(51) Int. Cl.: B60P 1/36, B60P 7/12

(54) **Vorrichtung zum Transport von Rollen mit Fahrzeugen**

(30) Priorität: 26.07.1999 BE 9900504
(71) Anmelder: A.C.M. Sprl, 4780 Sank-Vith/Recht (BE)
(72) Erfinder: Dries, Manfred, 4750 Weywertz (BE)
(74) Vertreter: Van Malderen, Michel

(57) **Zusammenfassung**

Die vorliegende Erfindung betrifft eine Vorrichtung zum Transport von Rollen (2) mit Fahrzeugen weist zwei in Längsrichtung des Fahrzeugs parallel verlaufende Ketten (8) und davon angetriebene Fördermittel (6) auf. Erfindungsgemäß haben die Fördermittel (6) an ihrer Oberseite eine Vertiefung (7) zur Auflage einer Achse (4). Dies ermöglicht es, die Achsen (4) von Rollen (2) direkt sicher auf den Fördermitteln (6) zu positionieren, um während des Transportes ein Verschieben von Rollen (2) im Laderaum des Fahrzeugs zu vermeiden.

## Beschreibung

### Gegenstand der Erfindung

Die vorliegende Erfindung betrifft eine Vorrichtung zum Transport von Rollen mit Fahrzeugen mit zwei in Längsrichtung des Fahrzeugs parallel verlaufenden Ketten und davon angetriebenen Fördermitteln.

### Stand der Technik und technologischer Hintergrung

Eine Vielzahl an Transporten wird heute mit Paletten durchgeführt. Das Gut wird auf die Paletten aufgestapelt und anschließend werden die in ihrer Größe standardisierten Paletten auf Kraftfahrzeuge geladen. Zum Transport von Paletten sind auch Fördereinrichtungen bekannt, die es erlauben, mittels Ketten beladene und unbeladene Paletten auf einem Fahrzeug zu bewegen.

Paletten sind aber für den Transport von Rollen ungeeignet, da die Rollen auf den Transportpaletten nur schlecht befestigt werden können und größere Rollen, wie insbesondere Kabelrollen oder Bandstahlrollen, mit Paletten nicht mehr transportierbar sind.

Zum Transport von derartigen Rollen, die meist einen Durchmesser von mehr als einem Meter aufweisen, wurden bisher im Laderaum eines Fahrzeugs in Längsrichtung des Fahrzeugs Schienen angeordnet, auf denen die Rollen ins Innere des Laderaums geschoben werden können. Dies führt jedoch häufig zu einem Verrutschen oder Querstellen der schweren Rollen und somit zu hohen Gefahren beim Be- und Entladen der Lastkraftwagen.

Das Patent US-A-2 422 768 beschreibt ein Fördergerät für Rollen, welches mit zwei parallelen endlosen Gelenkketten in Längsrichtung vorgesehen ist. Einige Glieder der Ketten tragen Klampen, die dazu bestimmt sind, die Achsen der Rollen zu erhalten.

Das Patent US-A-2 335 516 beschreibt eine Vorrichtung zum Stapeln, Laden und Transport von schweren Rollen auf einem Lastkraftwagen, die eventuell zwei Reihen in Hochrichtung bilden. Die Rollen sind durch seitliche Platten festgestellt, die eine Vielzahl an regelmäßigen beabstandeten Öffnungen aufweisen, worin die Achsen der Rollen eingelegt werden können. Übrigens sind andere Mittel vorgesehen, sowie Stangen, um die Rollen entweder zu den sogenannten Platten oder zu der Struktur des Wagens weiter zu befestigen.

Die Patente US-A-2 335 517 und US-A-2 335 518 offenbaren ähnliche Vorrichtungen, die erlauben, Rollen auf einem Lastkraftwagen zu stapeln und befestigen. Zum Beispiel, im Patent US-A-2 535 518, sind Schienen für jede Reihe von Rollen in der Längsrichtung vorgesehen. Die Schienen sind mit Fördermittel ausgestattet, die Hülsen und Stützen aufweisen. Die Hülsen sind angeordnet, um über die Achse der Rolle übereinander zu greifen, und die Stützen gestatten die Verschiebung der Fördermittel auf den Schienen. Die Hülsen sind geschlitzt, um einen Schlüssel zu erhalten, der die Verriegelung der Rolle auf der Schiene ermöglicht.

All diese vorgeschlagenen Vorrichtungen sind sehr kompliziert und langsam in Angriff zu nehmen, zerbrechlich und, weil sie schon alt sind, nicht vorgesehen, um eine Automatisierung aufzunehmen.

### Ziel der Erfindung

Der Erfindung liegt daher die Aufgabe zugrunde, eine gattungsgemäße Vorrichtung zum Transport von Rollen derart weiterzubilden, daß eine einfache, schnelle Be- und Entladung von Fahrzeugen ermöglicht wird.

### Zusammenfassung der Erfindung

Diese Aufgabe wird bei einer gattungsgemäßen Vorrichtung dadurch gelöst, daß die Fördermittel an ihrer Oberseite eine Vertiefung zur Auflage einer Achse aufweisen.

Der Erfindung liegt die Erkenntnis zugrunde, daß die Rollen nicht zunächst auf Paletten, Rollwagen oder ähnliches gestellt werden müssen, sondern direkt an den Ketten befestigt werden können. Hierzu wird vorgeschlagen, an den Ketten Fördermittel vorzusehen, die eine derartige Vertiefung aufweisen, daß die Achse einer Rolle in die Vertiefung eingelegt werden kann.

Die Rollen haben entweder selbst eine Welle oder in die Trommel wird eine Achse eingesteckt, die dazu dient, die Trommel an zwei gegenüberliegend angeordneten Fördermitteln aufzuhängen. Da die Fördermittel eine Vertiefung an ihrer Oberseite aufweisen, kann die Achse einer Rolle einfach in diese Vertiefung eingelegt werden. Durch das Gewicht der Rolle liegt die Rolle sicher im Fördermittel. Bei einem Bewegen der an den zwei parallel verlaufenden Ketten befestigten Fördermittel wird die Rolle mittransportiert. Somit kann beispielsweise eine an der hinteren Ladebordwand eines Laderaumes in die Fördermittel eingehängte Rolle mittels der Ketten in den Laderaum hinein gefördert werden. Hintereinander angeordnete Fördermittel auf den Ketten ermöglichen es, mittels zweier paralleler Ketten mehrere Trommeln zu tragen und in den Laderaum zu fördern.

Ein einfacher Aufbau der Vorrichtung entsteht, wenn die Ketten um quer zur Längsrichtung des Fahrzeugs angeordnete Achsen umgelenkt werden. Auf die Fördermittel im oberen Bereich der Kette können somit Rollen aufgelegt werden und beim Transport der Rollen ins Fahrzeuginnere werden im unteren Bereich der Kette weitere Fördermittel an den Beladeort geführt.

Eine bevorzugte Ausführungsform sieht vor, daß die Fördermittel vorzugsweise mit Laufrollen auf einer Tragschiene laufen. Die gesamten Abstützaufgaben der Vorrichtung übernimmt somit die Tragschiene während die Kette nur für eine Förderung in Längsrichtung des Fahrzeugs sorgt.

Um einen positionsgerechten Lauf der Laufrollen auf der Tragschiene zu gewährleisten wird vorgeschlagen, daß die Laufrollen eine umlaufende Nut zur Führung der Laufrollen auf der Tragschiene aufweisen. Die durch die Kette angetriebenen Rollen laufen somit sicher im Bereich der Schiene, ohne daß es weiterer Führungen bedarf.

Um ein Herausspringen einer Rollenachse aus der Vertiefung zu vermeiden, wird vorgeschlagen, daß oberhalb der Fördermittel eine Sicherungsschiene angeordnet ist, die die Achsen vorzugsweise formschlüssig hält. Die Sicherungsschiene ist so angeordnet, daß sich im Belade-und Entladebereich ein Herausnehmen und Auflegen der Rollen auf die Fördermittel erlaubt und in der Transportposition die Fördermittel derart abdeckt, daß ein Herausspringen der Rollenachsen aus den Fördermitteln vermieden wird.

Eine effektive Förderung von Rollen verschiedener Durchmesser in einem Fahrzeug wird dadurch erzielt, daß die Fördermittel in unterschiedlichen Abstanden zueinander angeordnet sind. Je nach Anwendungsfall können die Fördermittel an verschiedenen Kettengliedern befestigt werden, um möglichst viele Rollen verschiedener Durchmesser im Laderaum eines Fahrzeugs zu transportieren. Ein Schnellverschluß an den Fördermitteln erleichtert die Befestigung der Fördermittel an der Kette.

Wenn die Rollen eine Trommel mit aufgewickeltem Material aufweisen, ist es vorteilhaft, wenn die Fördermittel etwa im Abstand des Durchmessers einer Rolle oder einer Trommel angeordnet sind. Somit können sowohl volle Rollen als auch leere Rollen, das heißt, Trommeln, eng beabstandet auf dem Fahrzeug transportiert werden.

Eine vorteilhafte Ausgestaltung der Vorrichtung sieht vor, daß an einer Hälfte der Kette Fördermittel im Abstand des Durchmessers einer Rolle, und an der anderen Hälfte der Kette Fördermittel im Abstand des Durchmessers einer Trommel angeordnet sind. Somit können entweder hintereinander viele Rollen transportiert werden oder - gegebenenfalls auf dem Rückweg - kann eine Vielzahl an Trommeln eng nebeneinander liegen.

Insbesondere bei Rollen mit kleinerem Durchmesser oder Fahrzeugen mit großer Laderaumhöhe können oberhalb der zwei in Längsrichtung des Fahrzeugs verlaufenden Ketten zwei weitere in Längsrichtung des Fahrzeugs verlaufende Ketten mit Fördermitteln angeordnet sein. Dies erlaubt es, doppelt so viele Rollen zu transportieren oder mit den weiteren in Längsrichtung des Fahrzeugs verlaufenden Ketten andere Gegenstände ins Fahrzeugsinnere zu bewegen.

Eine angenehme Verwendung der Vorrichtung ergibt sich durch einen automatischen Kettenantrieb mit einer Steuerung, die die Kette jeweils um den Abstand zwischen zwei Fördermitteln weiterbewegt. Dies kann beispielsweise durch Lichtschranken oder Sensoren, wie Metalldetektoren, leicht eingerichtet werden, so daß die Fördermittel nach jeder Beladung so weitertransportiert werden, daß das nächste Fördermittel in optimaler Beladeposition steht. Dasselbe gilt für die Entladung des Fahrzeugs.

Eine vorteilhafte Variante der Steuerung sieht vor, daß sie einen unter einem Fördermittel positionierten Belastungsschalter aufweist. Dieser Belastungsschalter kann beispielsweise an der Be- und Entladeseite der endlos umlaufenden Kette zwischen Fördermittel und Tragschiene angeordnet sein, so daß bei jeder Beladung eines darüberliegenden Fördermittels der Belastungsschalter ausgelöst wird und einen Weitertransport der Rolle iniziiert. Beim Entladen kann bei einer Entlastung dieses Belastungsschalters ein Weitertransport der Rollen iniziiert werden.

Beim Anfahren und Anhalten des Fahrzeuges wirken Trägheitskräfte auf die Rollen, die zu einer Bewegung der Rollen relativ zu den Fördermitteln führen. Um ein Herausspringen der Rollen aus den Fördermitteln zu vermeiden und um Beschädigungen des Fahrzeugs zu verhindern, wird daher vorgeschlagen, daß in einem Umlenkbereich der Ketten eine Prellbockeinrichtung angeordnet ist. Diese Prellbockeinrichtung ist vorzugsweise so positioniert, daß mit einem Prellbock zwischen der vordersten Rolle und dem vorderen Ende des Laderaums ein Herausspringen der Rollen beim Bremsen des Fahrzeugs verhindert wird und mit einer zweiten Prellbockeinrichtung zwischen der hintersten Rolle und der hinteren Bordwand ein Herausspringen der hintersten Rolle aus dem Fördermittel vermieden wird. Die dazwischen liegenden Rollen werden durch die angrenzenden Rollen gehalten sofern der Abstand zwischen zwei Rollen die halbe Breite einer Vertiefung nicht überschreitet.

Damit beim Beladen und Entladen eines Fahrzeugs die Ketten um die richtige Strecke weitergefahren werden, wird eine Vorrichtung zur Unterscheidung von Rollen und Trommeln vorgeschlagen. Diese Vorrichtung kann mit einem optischen Sensor ausgerüstet sein oder das Gewicht der Trommeln ermitteln, um je nach Beladegut die Kette um die richtige Strecke intervallweise fortzubewegen.

### Kurze Beschreibung der Figuren

Ein bevorzugtes Ausführungsbeispiel der Erfindung ist in der Zeichnung dargestellt und wird im folgenden näher erläutert.

Figur 1 zeigt ein mit elf Rollen beladenes Fahrzeug.

Figur 2 zeigt ein mit zwanzig Trommeln beladenes Fahrzeug.

Figur 3 zeigt einen Ausschnitt des hinteren Endes eines Fahrzeugs mit einem Fördermittel in Beladeposition.

Figur 4 zeigt einen Ausschnitt gemäß Figur 3 mit einem Fördermittel in Transportposition.

Figur 5 zeigt eine Vorderansicht des Fördermittels.

Figur 6 zeigt eine Seitenansicht des Fördermittels.

Figur 7 zeigt eine Draufsicht auf das Fördermittel.

Figur 8 zeigt eine Rückansicht des Fördermittels.

### Detaillierte Beschreibung der Erfindung

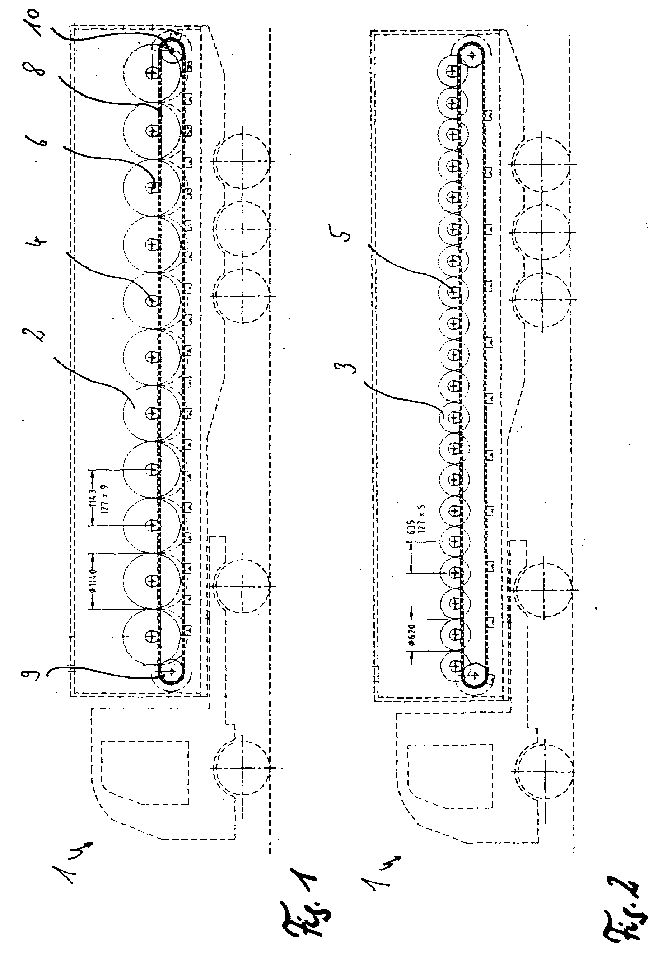

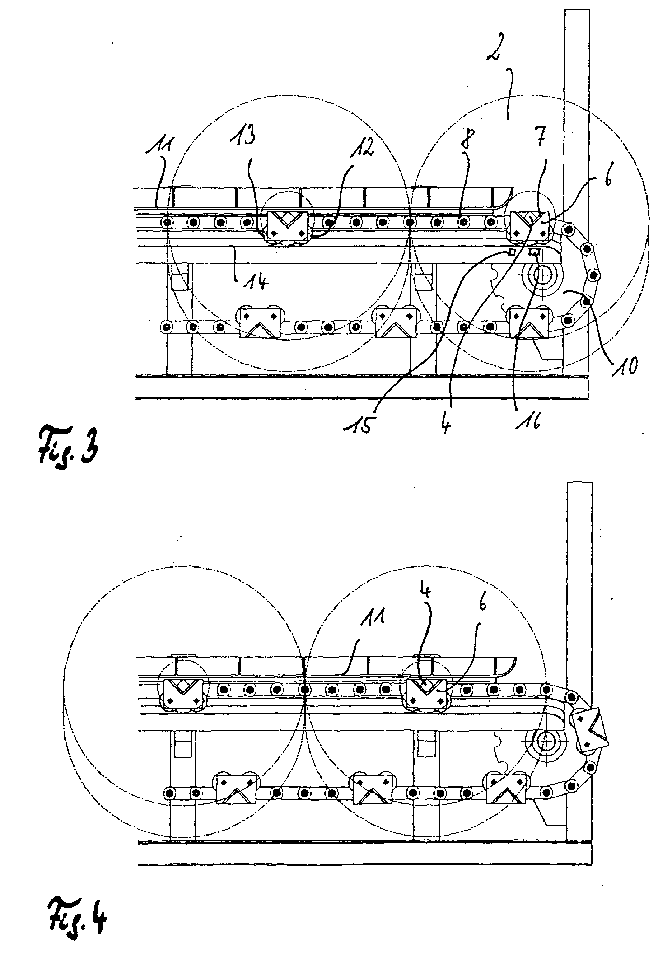

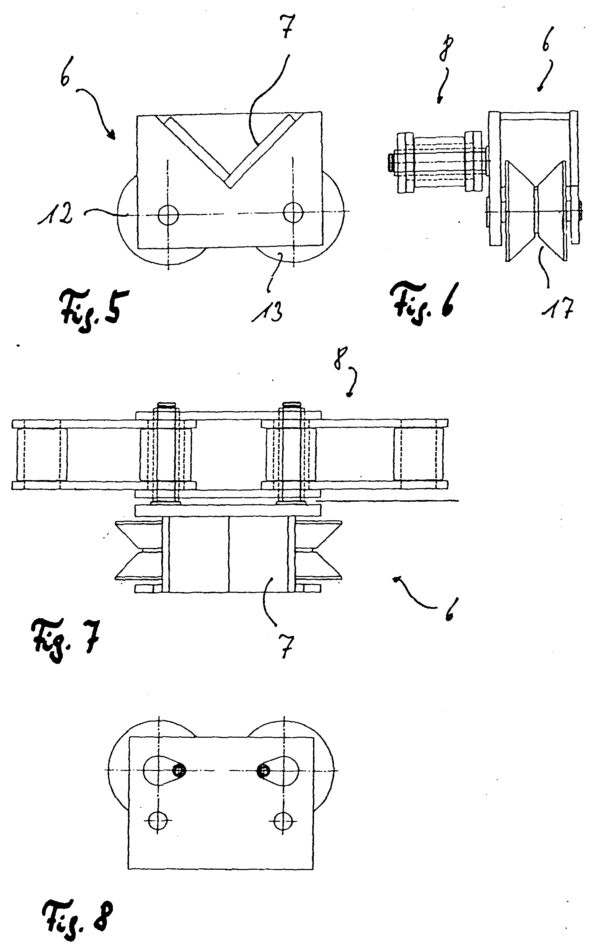

Das in den Figuren 1 und 2 gezeigte Fahrzeug 1 ist in Figur 1 mit elf Rollen 2 beladen, wobei jede Rolle 2 einen Durchmesser von 1.140 mm hat. In Figur 2 ist das Fahrzeug mit leeren Rollen 2, das heißt, mit Trommeln 3 beladen, wobei jede Trommel 3 einen Durchmesser von 620 mm hat. Die Achsen 4, 5 der Rollen oder Trommeln liegen auf Fördermitteln 6, an deren Oberseite eine Vertiefung 7 (vergleiche Figur 5) vorgesehen ist.

Die Fördermittel 6 sind an einer Kette 8 befestigt und die Kette 8 läuft als endlose Kette um ein senkrecht stehendes Antriebsrad 9 und ein ebenfalls senkrecht stehendes Umlenkrad 10. Die eine Spannweite der Kette zwischen Antriebsrad 9 und Umlenkrad 10 ist mit elf Fördermitteln 6 bestückt, die in einem Abstand von 1.143 mm zueinander angeordnet sind. Die gegenüberliegende Spannweite der Kette 8 ist mit zwanzig Fördermitteln bestückt, die in einem Abstand von 635 mm zueinander angeordnet sind.

Mittels der Antriebs- und Umlenkräder 9 und 10 kann die Kette somit in eine Position gefahren werden, bei der elf Fördermittel gleichmäßig beabstandet im oberen Kettenbereich angeordnet sind. Durch Drehen der Räder 9 und 10 kann dieser obere Kettenbereich jedoch auch in die untere Position verfahren werden, so daß die zuvor unten liegenden zwanzig Fördermittel gleichmäßig beabstandet im oberen Bereich angeordnet werden können.

Die Achsen 4, 5 liegen beidseitig der Rollen oder Trommeln auf Fördermitteln auf. Während die Figuren 1 und 2 jeweils nur eine Kette mit Fördermitteln zeigen, ist die andere Kette (nicht gezeigt) parallel zur ersten Kette auf der gegenüberliegenden Seite des Fahrzeugs angeordnet.

In der Praxis dienen die elf weit beabstandeten Fördermittel dem Transport von Rollen, die mit Material gefüllt sind. Nach Abrollen des Materials verbleiben nur noch die Trommeln mit einem geringeren Durchmesser. Die eng beabstandete Anordnung von Fördermitteln auf der anderen Seite der Kette ermöglicht es, zwanzig Trommeln zurückzutransportieren und somit auch beim Transport von Trommeln die gesamte Länge des Laderaums gut zu nutzen.

Die Figuren 3 und 4 zeigen einen Ausschnitt des hinteren Endes des zu beladenden Fahrzeugs. Figur 3 zeigt die Beladeposition mit dem leicht zugänglichen Fördermittel 6, während in Figur 4 das Fördermittel 6 durch eine Sicherungsschiene 11 abgedeckt ist.

Die Fördermittel 6 haben jeweils zwei Laufrollen 12 und 13, mit denen sie auf einer Tragschiene 14 durch die Kette 8 angetrieben hin- und herbewegbar sind. An der Oberseite des Fördermittels 6 ist eine Vertiefung 7 zur Aufnahme der Achse 4 einer Rolle 2 vorgesehen. In der abgebildeten Position sind oberhalb der Umlenkrolle 10 Fördermittel 6 in großem Abstand angeordnet, während unterhalb der Umlenkrolle 10 die gleichen Fördermittel in kleinerem Abstand zueinander angeordnet sind.

Die Sicherungsschiene 11 deckt den größten Teil des oberen Kettenbereiches derart ab, daß die Achsen 4 der Rollen 2 zwischen der Vertiefung 7 des Fördermittels 6 und der Unterseite der Sicherungsschiene 11 liegen. Der Abstand der Sicherungsschiene 11 zum Fördermittel 6 ist dabei so gewählt, daß das Fördermittel 6 auch bei eingelegter Achse 4 frei unter der Sicherungsschiene 11 beweglich ist. Eine Bewegung der Achse 4 innerhalb der Vertiefung 7 wird jedoch durch die darüber angeordnete Sicherungsschiene 11 verhindert.

Die Tragschiene 14 ist etwas länger als die Sicherungsschiene 11 ausgebildet. Dadurch ist am hinteren Fahrzeugende das erste auf der Tragschiene 14 laufende Fördermittel 6 von der Sicherungsschiene 11 nicht bedeckt. Diese in Figur 3 gezeigte Beladeposition erlaubt es, die Achse 4 der Rolle 2 in die Vertiefung 7 des Fördermittels 6 einzulegen. Anschließend wird das Fördermittel 6 auf der Tragschiene 14 mittels der Kette 8 zum Fahrzeugvorderteil hin gezogen und das Fördermittel gelangt dabei in den Spalt zwischen der Tragschiene 14 und der Sicherungsschiene 11. In der in Figur 4 dargestellten Transportposition liegt die Achse 4 sicher zwischen dem Fördermittel 6 und der Sicherungsschiene 11.

Eine Sensor 15 erlaubt es, die genaue Position des Fördermittels an die Steuerung (nicht gezeigt) des Antriebs des Antriebszahnrades 9 zu melden, um automatisch die richtige Beladeposition einzustellen. Ob das Fördermittel unbelastet ist oder ob auf ihm eine Rolle oder eine Trommel aufliegt, wird von einem unterhalb des Fördermittels angeordneten Drucksensor oder Belastungsschalter 16 ermittelt und ebenfalls an die Steuerung weitergeleitet.

Die Figuren 5 bis 8 zeigen den genauen Aufbau eines Fördermittels 6 und dessen Anbindung an die Kette 8. Das Fördermittel 6 hat an seiner Oberseite die Kerbe 7 und an seiner Unterseite zwei Rollen 12 und 13. Diese Rollen haben eine umlaufende Nut 17, um eine genaue Führung der Fördermittel auf der im Querschnitt dreieckigen Tragschiene 14 zu gewährleisten.

Der gesamte Antrieb der Ketten 8 kann entweder über einen Elektromotor oder hydraulisch erfolgen. Um die Fördermittel sanft anlaufen zu lassen, sanft wieder zu stoppen und genau zu positionieren, wird ein Getriebemotor über einen Frequenzumrichter angesteuert.

Ein halbautomatischer Ladezyklus besteht darin, daß ein in der in Figur 3 gezeigten Position angeordnetes Fördermittel zunächst beladen wird und dann automatisch nur soweit in den Laderaum des Fahrzeugs 1 gefördert wird, bis das nächste Fördermittel die in Figur 3 gezeigte Position auf der Tragschiene und vor der Sicherungsschiene einnimmt. In dieser Position wird das nächste Fördermittel beladen usw. Derselbe Ablauf wird beim Abladen der Rollen eingehalten, so daß beim Be- und Entladen immer nur eine Rolle frei zugänglich ist, während die Achsen der anderen Rollen von der Sicherungsschiene 11 bedeckt sind.

## Patentansprüche

1. Vorrichtung zum Transport von Rollen (2) mit Fahrzeugen (1) mit zwei in Längsrichtung des Fahrzeugs (1) parallel verlaufenden Ketten (8) und davon angetriebenen Fördermitteln (6), dadurch gekennzeichnet, daß die Fördermittel (6) an ihrer Oberseite eine Vertiefung (7) zur Auflage einer Achse (4) aufweisen und vorzugsweise mit Laufrollen (12, 13) auf einer Tragschiene (14) laufen.

2. Vorrichtung nach Anspruch 1, dadurch gekennzeichnet daß die Ketten (8) um quer zur Längsrichtung des Fahrzeugs (1) angeordnete Achsen umgelenkt werden.

3. Vorrichtung nach Anspruch 1 oder 2, dadurch gekennzeichnet, daß die Laufrollen (12, 13) eine umlaufende Nut (17) zur Führung der Laufrollen (12, 13) auf der Tragschiene (14) aufweisen.

4. Vorrichtung nach einem der vorhergehenden Ansprüche, dadurch gekennzeichnet, daß oberhalb der Fördermittel (6) eine Sicherungsschiene (11) angeordnet ist, die die Achse (4) vorzugsweise formschlüssig hält.

5. Vorrichtung nach einem der vorhergehenden Ansprüche, dadurch gekennzeichnet, daß die Fördermittel (6) in unterschiedlichen Abständen zueinander angeordnet sind.

6. Vorrichtung nach einem der vorhergehenden Ansprüche, dadurch gekennzeichnet, daß die Rollen (2) eine Trommel (3) mit aufgewickeltem Material aufweisen und die Fördermittel (6) etwa im Abstand des Durchmessers einer Rolle (2) oder einer Trommel (3) angeordnet sind.

7. Vorrichtung nach Anspruch 6, dadurch gekennzeichnet, daß an einer Hälfte der Kette (8) Fördermittel (6) im Abstand des Durchmessers einer Rolle (2) und an der anderen Hälfte der Kette (8) Fördermittel (6) im Abstand des Durchmessers einer Trommel (3) angeordnet sind.

8. Vorrichtung nach einem der vorhergehenden Ansprüche, dadurch gekennzeichnet, daß oberhalb der zwei in Längsrichtung des Fahrzeugs (1) verlaufenden Ketten (8) zwei weitere in Längsrichtung des Fahrzeugs (1) verlaufende Ketten mit Fördermitteln (6) angeordnet sind.

9. Vorrichtung nach einem der vorhergehenden Ansprüche, gekennzeichnet durch einen automatischen Kettenantrieb und eine Steuerung, die die Kette (8) jeweils um den Abstand zwischen zwei Fördermitteln (6) weiterbewegt.

10. Vorrichtung nach Anspruch 10, dadurch gekennzeichnet, daß die Steuerung einen Sensor (15) aufweist.

11. Vorrichtung nach Anspruch 9 oder 10, dadurch gekennzeichnet, daß die Steuerung einen unter einem Fördermittel positionierten Drucksensor (16) aufweist.

12. Vorrichtung nach einem der vorhergehenden Ansprüche, dadurch gekennzeichnet, daß in einem Umlenkbereich der Ketten (8) eine Prellbockeinrichtung angeordnet ist.

13. Vorrichtung nach einem der vorhergehenden Ansprüche, dadurch gekennzeichnet, daß die Fördermittel (6) so angeordnet sind, daß die Umfangsflächen der Rollen (2) sich gegenseitig und das Fahrzeug nicht berühren.

14. Vorrichtung nach einem der vorhergehenden Ansprüche, gekennzeichnet durch eine Vorrichtung zur Unterscheidung von Rollen (2) und Trommeln (3).

15. Fahrzeug mit einer Vorrichtung nach einem der vorgehenden Ansprüche ausgestattet, das zum Laden, Transport und Abladen von Rollen vorgesehen ist.
